# FASCICULE DE BREVET EUROPEEN

(11) **EP 2 795 475 B1**
(45) Date de publication et mention de la délivrance du brevet: **20.01.2016**
(21) Numéro de dépôt: 12772984.6
(22) Date de dépôt: 18.10.2012
(51) Int. Cl.: G06F 13/40

(54) **DISPOSITIF DE STOCKAGE ET D'ÉCHANGE DE DONNÉES**
DATENAUSTAUSCH UND SPEICHERUNGSVORRICHTUNG
DATA EXCHANGE AND STORAGE DEVICE

(30) Priorité: 22.12.2011 FR 1162323
(43) Date de publication de la demande: 29.10.2014
(73) Titulaire: Sagemcom Documents SAS, 92500 Rueil Malmaison (FR)
(72) Inventeur: BAPSERES, Michel, F-92500 Rueil Malmaison (FR)
(74) Mandataire: Lavialle, Bruno François Stéphane
(86) Numéro de dépôt international: PCT/EP2012/070686
(87) Numéro de publication internationale: WO 2013/091928

(56) Documents cités:
- EP-A1- 1 491 973
- EP-A2- 1 643 372
- US-A1- 2004 151 071
- US-A1- 2009 295 327

## Description

### DOMAINE TECHNIQUE GENERAL

L'invention concerne un dispositif amovible USB.

### ETAT DE L'ART

Les périphériques amovibles USB, notamment les clés USB, sont classiquement connus.

Ils intègrent une électronique leur permettant de gérer le stockage et l'échange de données et sont habituellement pourvus de connecteurs mâles, qui permettent leur raccordement à des dispositifs hôtes, comme des micro-ordinateurs, eux-mêmes pourvus de connecteurs femelles.

On connait déjà par ailleurs des câbles de connexion dont une extrémité est à connecteur mâle et l'autre extrémité à connecteur femelle et dont les deux extrémités peuvent être raccordées l'une sur l'autre pour former une boucle, pour permettre à un utilisateur de porter un dispositif en collier ou bracelet. Une connexion de ce type est par exemple proposée dans la demande EP 2.241.935.

### PRESENTATION DE L'INVENTION

Un but de l'invention est de proposer un dispositif amovible qui peut être utilisé à la fois comme périphérique USB et comme hôte USB.

À cet effet, elle propose un dispositif comportant une portion de câble à connecteur USB mâle raccordé à un module apte à fonctionner comme périphérique USB, caractérisé en ce qu'il comporte également une portion de câble à connecteur USB femelle raccordé au module, ledit module étant apte à fonctionner également en tant qu'hôte USB, les connecteurs mâle et femelle étant aptes à être raccordés l'un sur l'autre pour que les portions de câble forment ensemble, avec le module, une boucle, le module étant configuré pour contrôler l'échange de données en fonction de l'état de raccordement de son connecteur USB mâle et de son connecteur USB femelle.

Les différents modes de réalisation de l'invention offrent de nombreux avantages.

Ainsi, le dispositif de stockage et d'échange de données est compact et facile à transporter.

En outre, celui-ci s'adapte immédiatement, sans besoin de câbles additionnels, à tout dispositif électronique présentant un connecteur USB.

En particulier, le dispositif proposé permet une gestion optimale des connexions réalisées par les connecteurs du dispositif et évite tout dysfonctionnement. En particulier, elle évite que la batterie du module ne se décharge dans l'électronique de celui-ci lorsque les deux portions de câble sont raccordées l'une sur l'autre.

Enfin, des connecteurs et lecteurs peuvent être incorporés au dispositif tout en évitant la présence de connectiques externes encombrantes et disgracieuses.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- La Figure 1 est une représentation schématique d'un mode de réalisation d'un dispositif selon l'invention ;
- La Figure 2 est une représentation schématique d'un mode de réalisation du contrôle du chargement de la batterie du dispositif et des échanges de données ;
- Les Figures 3 et 4 sont une représentation d'un mode de réalisation d'une portion de câble d'un dispositif selon l'invention ;
- La Figure 5 est une représentation d'un mode de réalisation d'un dispositif selon l'invention.

### DESCRIPTION DETAILLEE

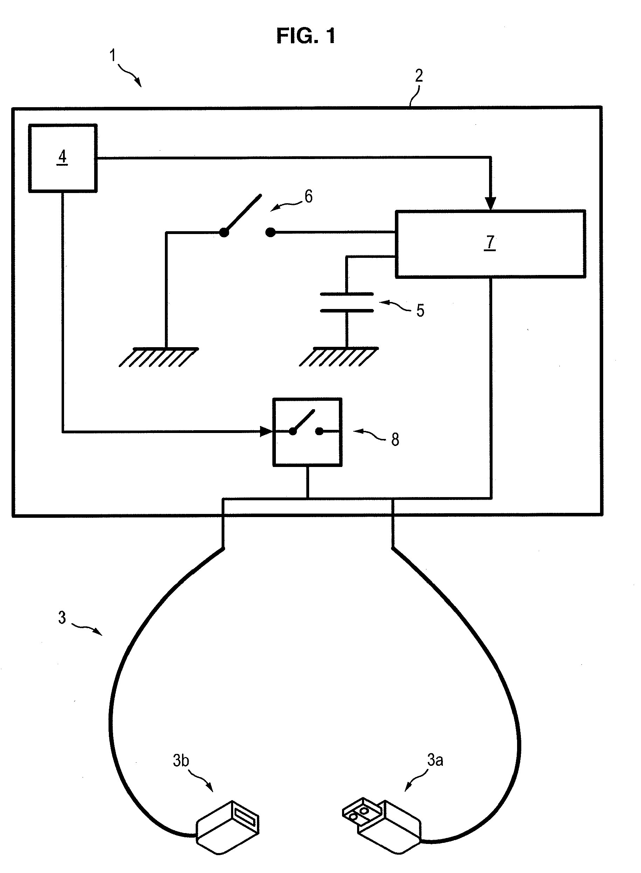

On a représenté de manière schématique en Figure 1 un mode de réalisation d'un dispositif 1 qui est apte à fonctionner à la fois comme périphérique USB ou comme hôte.

Le dispositif 1 comprend un module 2 à support mémoire et un câble USB 3 dont une portion 3a se termine par un connecteur USB mâle et dont une portion 3b se termine par un connecteur USB femelle.

Par connecteur USB mâle, on entend ici et dans tout le présent texte le fait que le connecteur possède un embout en saillie, permettant de coopérer avec une fente d'un connecteur USB femelle. De même, le connecteur femelle comprend une fente, adaptée pour coopérer avec un embout mâle d'un connecteur USB mâle.

Le module 2 comporte en particulier un microprocesseur 4 qui gère les échanges, une batterie 5 apte à être rechargée, un interrupteur 6, une unité 8 pour le contrôle des échanges de données vers le module 2 ou à partir du module 2, et, le cas échéant, une unité 7 pour la gestion du chargement de la batterie 5. Les unités 7 et 8 sont des unités électroniques.

L'ensemble de l'électronique du module 2 est par exemple disposée dans une coque de protection en plastique. Divers éléments électroniques, optiques ou mécaniques additionnels, sont présents dans le dispositif 1 selon la nature du dispositif 1. Par exemple, si le dispositif 1 est une caméra, celui-ci comprend de manière connue un objectif et une matrice de capteurs, le processeur 4 permettant de gérer la prise de vue.

Le connecteur USB mâle 3a peut être connecté avec le connecteur USB femelle d'un dispositif électronique, par exemple un port USB de micro-ordinateur ou encore un port USB d'un adaptateur de chargement, pour l'échange de données et/ou l'échange d'énergie à des fins de chargement.

Le connecteur USB femelle 3b peut être connecté avec le connecteur USB mâle d'un dispositif électronique, pour l'échange de données.

En outre, le connecteur USB mâle 3a et le connecteur USB femelle 3b sont aptes à être connectés entre eux, les portions de câble formant ainsi avec le module 2 une boucle fermée. Ceci permet le transport aisé et ergonomique du dispositif 1 par un utilisateur, via la prise en main du lacet fermé ainsi réalisé, lequel peut également être utilisé comme bracelet ou collier pour permettre à l'utilisateur de facilement porter ledit dispositif 1.

Selon que les connecteurs 3a, 3b sont ou non engagés dans d'autres connecteurs USB et, lorsqu'ils sont raccordés, selon qu'ils sont raccordés à un dispositif électronique (micro-ordinateur, par exemple) en tant que périphérique ou en tant qu'hôte, à un adaptateur de chargement ou encore selon qu'ils sont raccordés entre eux, les unités 7 et 8 du module 2 détectent pour eux un état de connexion donné.

L'unité 8 du module 2 est configurée (« hardware ») pour contrôler l'échange de données. Le cas échéant, l'unité 7 est configurée pour contrôler le chargement de la batterie 5 en fonction de l'état de connexion du connecteur USB mâle 3a et du connecteur USB femelle 3b.

### Chargement de la batterie

Dans un mode de réalisation, l'unité 7 gère le chargement de la batterie 5 en fonction de l'état de connexion du connecteur USB mâle 3a et du connecteur USB femelle 3b.

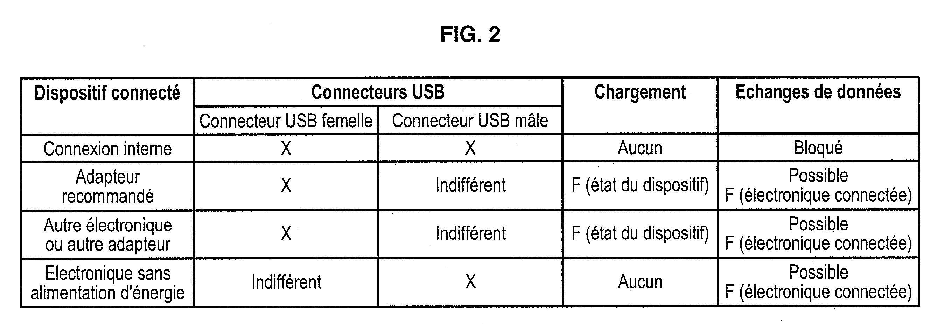

Ainsi, et comme l'illustre la table de la Figure 2, l'unité 7 est configurée pour empêcher le chargement de la batterie 5 lorsque l'état de connexion des connecteurs correspond à une connexion entre le connecteur USB mâle 3a et le connecteur USB femelle 3b.

En effet, dans ce cas, le connecteur USB mâle 3a est effectivement connecté. Or, dans cette configuration de connexion, il n'est bien entendu pas souhaitable que la batterie 5 se décharge dans l'électronique du module 2.

Également, l'unité 7 électronique de gestion du chargement est configurée pour, lorsque le connecteur USB mâle 3a est connecté à une électronique intégrant elle-même une source d'énergie, gérer l'intensité du chargement de la batterie 5 en fonction de la nature de la source.

Ainsi, l'unité 7 autorise un niveau d'intensité de chargement ou un autre selon que le connecteur USB mâle 3a est connecté à une source d'énergie, comme par exemple un adaptateur de chargement ou une électronique présentant sa propre source d'énergie, en tant que périphérique pour celle-ci.

Également, l'unité 7 électronique de gestion du chargement de la batterie est configurée pour, lorsque le connecteur USB mâle 3a est connecté à une électronique présentant sa propre alimentation en énergie (batterie, ou connexion au secteur), imposer différents états de chargement selon l'état de l'interrupteur 6.

Ainsi, par exemple, lorsque cette électronique est un adaptateur de chargement recommandé par le fabricant, l'unité 7 impose une intensité de chargement à un niveau faible lorsque l'interrupteur 6 est dans une position « ON », le dispositif 1 étant dans un état actif. Il impose un chargement avec un niveau d'intensité élevé lorsque le dispositif 1 est dans un état inactif, l'interrupteur 6 étant en position « OFF ». Il s'agit ici de niveaux relatifs d'intensité.

Comme on le comprend, il est souhaitable d'imposer une intensité de chargement plus élevée lorsque le dispositif 1 est inactif, afin de profiter de cet état pour recharger le dispositif 1.

Lorsque le connecteur USB mâle est connecté à un autre adaptateur de chargement (par exemple un adaptateur non recommandé par le fabricant) ou à une autre électronique, le module est configuré pour empêcher le chargement de la batterie 5 par l'adaptateur ou la source d'énergie de l'autre électronique, si le dispositif est dans un état inactif, et pour imposer une intensité de chargement à un niveau faible si le dispositif est dans un état actif. Cette autre électronique est par exemple une électronique de type micro-ordinateur.

L'état de connexion du connecteur 3b femelle est indifférent pour le chargement de la batterie 5 via le connecteur 3a mâle : le connecteur 3b femelle peut quant à lui ne pas être connecté, ou être connecté à un autre dispositif de stockage, par exemple de type clé USB.

Également, lorsque le connecteur USB femelle 3b est connecté à un dispositif électronique apte à stocker des données et ne comprenant pas d'alimentation en énergie, l'unité 7 de gestion du chargement gère l'absence de chargement à partir de ce dispositif électronique. Il s'agit par exemple de gérer le fait que la batterie 5 du dispositif 1 n'a pas à être chargée dans ce cas. Le dispositif en question est par exemple une clé USB.

### Echange de données

Dans un mode de réalisation, l'unité 8 est configurée pour contrôler l'échange de données en fonction de l'état de connexion du connecteur USB mâle 3a et du connecteur USB femelle 3b, ou d'autres connecteurs ou lecteurs du dispositif.

L'unité 8 est configurée pour empêcher tout transfert de données à travers les connecteurs USB mâle et femelle 3a, 3b en cas de connexion du connecteur USB mâle 3a avec le connecteur USB femelle 3b (cf. Figure 2). En effet, la connexion des deux connecteurs a normalement tendance à enclencher un procédé d'échange de données. Toutefois, l'unité 8 reçoit en sortie du processeur 4 un signal qui stoppe cet échange.

Dans le cas où le connecteur USB mâle 3a et/ou le connecteur USB femelle 3b sont connectés à une électronique, l'unité 8 est configurée pour gérer l'échange de données en fonction de la nature de cette électronique. Comme mentionné précédemment, le dispositif 1 est à la fois adapté pour fonctionner en tant que périphérique USB (ex : fonctionnement de type clé USB), qu'en tant que périphérique hôte (ex : fonctionnement de type micro-ordinateur recevant une clé USB).

Si le connecteur USB mâle 3a est connecté à une électronique qui n'est pas adaptée pour l'échange de données, comme par exemple un adaptateur, ou n'est pas connecté, l'unité 8 est configurée pour gérer l'absence d'échange de données via le connecteur USB mâle 3a.

Dans ce cas, si le connecteur USB femelle 3b est simultanément connecté à un périphérique USB apte à échanger des données, l'unité 8 autorise et gère les échanges de données via le connecteur USB femelle 3b, tout en gérant l'absence d'échange de données via le connecteur USB mâle 3a. Toutefois, si le connecteur USB femelle 3b n'est pas connecté ou est connecté à une électronique n'étant pas apte à échanger des données, l'unité 8 gère l'absence d'échange de données via les deux connecteurs mâle et femelle 3a, 3b.

Dans le cas où le connecteur USB mâle 3a est connecté à une électronique adaptée pour l'échange de données, comme par exemple un micro-ordinateur, l'unité 8 est configurée pour autoriser l'échange de données entre le dispositif 1 et cette électronique via le connecteur USB mâle 3a. Dans ce cas, si le connecteur femelle 3b est simultanément connecté à une électronique n'étant pas apte à échanger des données, ou n'est pas connecté, l'unité 8 est configurée pour gérer l'absence d'échange de données via le connecteur USB femelle 3b.

Dans le cas où le connecteur USB mâle 3a et le connecteur USB femelle 3b sont chacun connectés à une électronique adaptée pour l'échange de données, l'unité 8 gère l'échange simultané de données à travers le connecteur USB mâle 3a et le connecteur USB femelle 3b. À titre d'exemple non limitatif, le dispositif 1 est connecté à la fois à un micro-ordinateur via le connecteur USB mâle 3a, et reçoit en tant que périphérique hôte une clé USB via le connecteur USB femelle 3b.

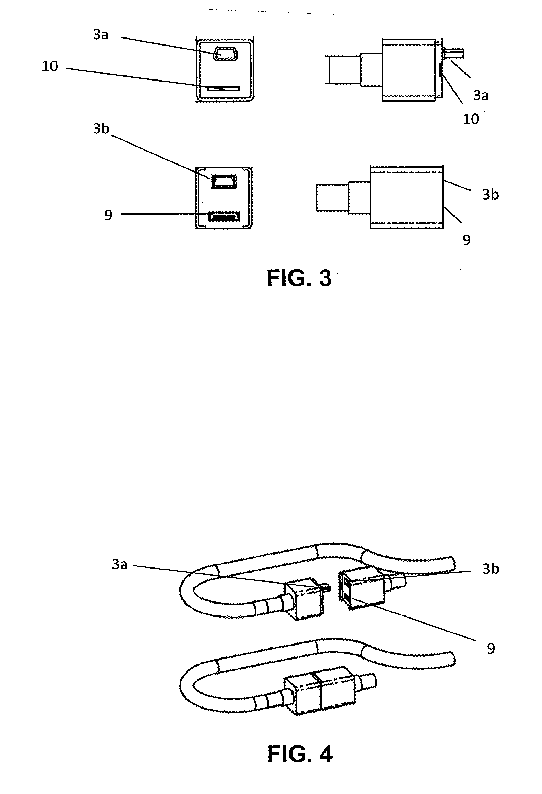

Dans un mode de réalisation, illustré en Figures 3 et 4, la portion de câble 3 à connecteur USB mâle 3a, et/ou la portion de câble 3 à connecteur USB femelle 3b comprend en outre au moins un connecteur 9 supplémentaire pour l'échange de données. Ce connecteur 9 est par exemple disposé sur la même face de la portion de câble 3 que le connecteur USB mâle et/ou que le connecteur USB femelle.

Par exemple, ce connecteur 9 supplémentaire est un connecteur HDMI (« *High-Definition Multimedia Interface* »). Ce connecteur HDMI est en général un connecteur femelle permettant l'échange de données visuelles (images, vidéo), et/ou sonores, avec des électroniques compatibles (téléviseurs, etc.).

Dans le cas où le connecteur USB mâle 3a et le connecteur 9 supplémentaire sont chacun connectés à une électronique adaptée pour l'échange de données, l'unité 8 gère l'échange simultané de données à travers le connecteur USB et le connecteur 9 supplémentaire. Par exemple, l'unité 8 autorise le transfert de données vers le dispositif 1 à travers le connecteur USB mâle 3a et le connecteur 9 supplémentaire, ou autorise une réception de données à travers un connecteur et un envoi de données via l'autre connecteur.

Il est en de même si à la fois le connecteur USB mâle 3, le connecteur USB femelle 3b, et le connecteur 9 supplémentaires sont chacun connectés à une électronique adaptée pour l'échange de données.

Dans un mode de réalisation (cf. Figure 3), la portion de câble 3 à connecteur USB mâle 3a, et/ou la portion de câble 3 à connecteur USB femelle 3b comprend en outre au moins un lecteur 10 de carte mémoire. Ce lecteur 10 est par exemple disposé sur la même face de la portion de câble 3 que le connecteur USB mâle et/ou que le connecteur USB femelle.

Ce lecteur 10 est apte à recevoir et à lire une carte mémoire amovible, pour la lecture des données stockées dans la carte.

Il s'agit par exemple d'un lecteur de cartes SD (« *Secure Digital »).* Ce type de carte est utilisé pour le stockage de données dans les appareils photos numériques, les caméscopes numériques, et d'autres appareils de ce type. Il peut s'agir d'autres cartes selon les standards de stockage utilisés.

L'unité 8 gère l'échange simultané de données dans le cas où le lecteur 10 reçoit une carte, et que l'un ou plus des autres connecteurs 3a, 3b et/ou 9 est également connecté à une électronique pour l'échange de données.

Dans le cas où le chargement de la batterie 5 est géré en fonction de l'état de connexion du connecteur USB mâle 3a ou USB femelle 3b, en plus de l'échange de données à travers l'un des connecteurs et/ou à travers le lecteur 10, l'unité 7 et l'unité 8 fonctionnent en parallèle selon les modes de réalisation décrits précédemment pour chacune de ces unités. Par exemple, l'unité 7 gère le chargement de la batterie 5 via l'un des connecteurs USB et l'unité 8 gère le transfert de données via l'un des connecteurs ou via le lecteur 10.

Comme on le constate, une pluralité de connecteurs et/ou de lecteurs peuvent être disposés dans la portion de câble, ce qui permet d'éviter des connectiques externes, et améliore l'ergonomie et l'aspect du dispositif.

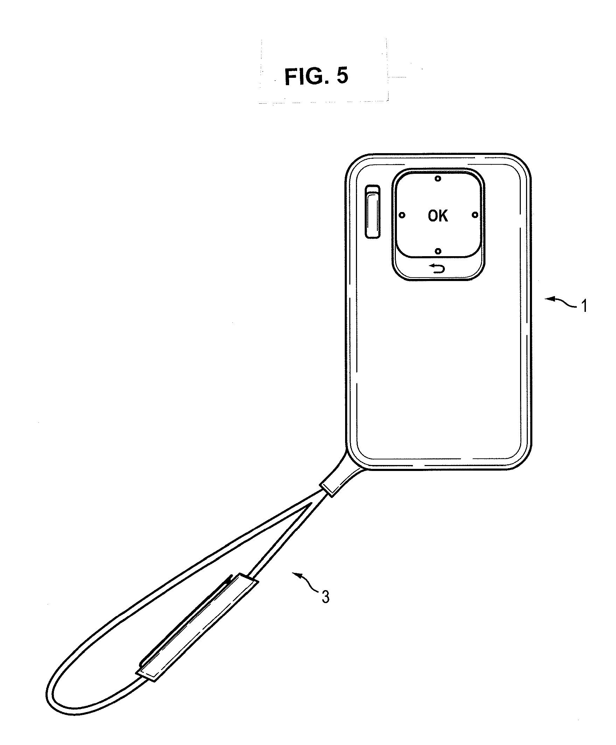

Le dispositif 1 peut être utilisé dans une grande variété d'applications. Par exemple, mais non limitativement, le dispositif 1 est choisi parmi : une clé USB, un appareil photo, une caméra, un ordinateur, un projecteur, ou un téléphone portable. Bien sûr, le dispositif 1 peut remplir plusieurs des fonctions précitées. Un mode de réalisation non limitatif du dispositif est illustré en Figure 5.

Comme on le comprend, celui-ci s'adapte immédiatement à tout dispositif électronique présentant un connecteur USB.

En particulier, le dispositif proposé permet une gestion optimale des connexions réalisées par les connecteurs du dispositif, qu'il s'agisse de connexions pour le transfert de données ou le transfert d'énergie.

En particulier, il est possible de gérer de manière fine le chargement de la batterie du dispositif, en fonction des différents états de connexion des connecteurs du dispositif.

Le dispositif offre également une ergonomie particulière, grâce à la boucle que peuvent réaliser les portions de câble entre elles.

## Revendications

1. Dispositif (1) comportant
une portion de câble (3) à connecteur USB mâle (3a) raccordé à un module (2) apte à fonctionner comme périphérique USB,
ledit dispositif étant **caractérisé en ce qu'**il comporte également une portion de câble à connecteur USB femelle (3b) raccordé au module, ledit module étant apte à fonctionner également en tant qu'hôte USB, les connecteurs mâle et femelle étant aptes à être raccordés l'un sur l'autre pour que les portions de câble forment ensemble, avec le module, une boucle, le module étant configuré pour contrôler les échanges de données en fonction de l'état de raccordement de son connecteur USB mâle et de son connecteur USB femelle.

2. Dispositif selon la revendication 1, comprenant une batterie (5), et dans lequel le module est configuré pour contrôler le chargement de sa batterie (5) en fonction de l'état de raccordement de son connecteur USB mâle et de son connecteur USB femelle.

3. Dispositif (1) selon la revendication 2, dans lequel le module est configuré pour empêcher le chargement de la batterie (5) lorsque l'état de raccordement des connecteurs correspond à une connexion entre le connecteur USB mâle et le connecteur USB femelle.

4. Dispositif (1) selon la revendication 2, dans lequel le module est configuré pour, lorsque le connecteur USB mâle est connecté à une source d'énergie, gérer l'intensité du chargement de sa batterie par la source d'énergie en fonction de la nature de la source.

5. Dispositif (1) selon la revendication 4, dans lequel le module est configuré pour:
- lorsque le connecteur USB mâle est connecté à un adaptateur de chargement en énergie recommandé par le fabricant, imposer une intensité de chargement à un niveau faible si le dispositif est dans un état actif, ou une intensité de chargement à un niveau élevé si le dispositif est dans un état inactif.

6. Dispositif (1) selon la revendication 5, dans lequel le module est configuré pour:
- lorsque le connecteur USB mâle est connecté à un autre adaptateur de chargement ou à une autre électronique, empêcher le chargement de la batterie (5) du dispositif par la source si le dispositif est dans un état inactif, et imposer une intensité de chargement à un niveau faible si le dispositif est dans un état actif.

7. Dispositif selon l'une des revendications 1 à 6, dans lequel le module est configuré pour :
- lorsque le connecteur USB femelle est connecté à un dispositif électronique apte à stocker des données et ne comprenant pas d'alimentation en énergie, gérer l'absence de chargement de sa batterie.

8. Dispositif selon l'une des revendications 1 à 7, dans lequel le module est configuré pour empêcher tout transfert de données à travers les connecteurs USB mâle et femelle en cas de connexion du connecteur USB mâle avec le connecteur USB femelle.

9. Dispositif selon l'une des revendications 1 à 8, dans lequel la portion de câble (3) à connecteur USB mâle (3a), et/ou la portion de câble (3) à connecteur USB femelle (3b) comprend en outre :
- un connecteur (9) supplémentaire pour l'échange de données, et/ou
- un lecteur (10) de carte mémoire.

10. Dispositif selon la revendication 9, dans lequel le connecteur (9) supplémentaire est un connecteur HDMI, et/ou le lecteur (10) de carte mémoire est un lecteur de carte SD.

11. Dispositif selon l'une des revendications 1 à 10, ledit dispositif étant choisi parmi : une clé USB, un appareil photo, une caméra, un ordinateur, un projecteur, ou un téléphone portable.

## Patentansprüche

1. Vorrichtung (1), umfassend
einen Kabelabschnitt (3) mit einem USB-Stecker (3a), der an ein Modul (2) angeschlossen ist, das dazu geeignet ist, als USB-Peripheriegerät zu funktionieren,
wobei die genannte Vorrichtung **dadurch gekennzeichnet ist, dass** sie ferner einen Kabelabschnitt mit einer USB-Buchse (3b) umfasst, die an das Modul angeschlossen ist, wobei das genannte Modul dazu geeignet ist, auch als USB-Host zu funktionieren, wobei der Stecker und die Buchse dazu geeignet sind, miteinander verbunden zu werden, damit die Kabelabschnitte miteinander mit dem Modul eine Schlaufe bilden, wobei das Modul so konfiguriert ist, dass es Datenaustäusche in Abhängigkeit vom Verbindungszustand ihres USB-Steckers und ihrer USB-Buchse kontrolliert.

2. Vorrichtung nach Anspruch 1, umfassend eine Batterie (5), und wobei das Modul so konfiguriert ist, dass es die Aufladung ihrer Batterie (5) in Abhängigkeit vom Verbindungszustand ihres USB-Steckers und ihrer USB-Buchse kontrolliert.

3. Vorrichtung (1) nach Anspruch 2, wobei das Modul so konfiguriert ist, dass es die Aufladung der Batterie (5) verhindert, wenn der Verbindungszustand der Steckverbinder einer Verbindung zwischen dem USB-Stecker und der USB-Buchse entspricht.

4. Vorrichtung (1) nach Anspruch 2, wobei das Modul so konfiguriert ist, dass es beim Anschluss des USB-Steckers an eine Energiequelle die Intensität der Aufladung ihrer Batterie durch die Energiequelle in Abhängigkeit von der Art der Quelle steuert.

5. Vorrichtung (1) nach Anspruch 4, wobei das Modul so konfiguriert ist, dass es,
- wenn der USB-Stecker an einen Ladeadapter zum Aufladen mit Energie angeschlossen ist, der vom Hersteller empfohlen ist, eine Ladeintensität mit einem geringen Pegel herbeiführt, wenn die Vorrichtung in einem aktiven Zustand ist, oder eine Ladeintensität mit einem hohen Pegel, wenn die Vorrichtung in einem inaktiven Zustand ist.

6. Vorrichtung (1) nach Anspruch 5, wobei das Modul so konfiguriert ist, dass es,
- wenn der USB-Stecker an einen anderen Ladeadapter oder an eine andere elektronische Vorrichtung angeschlossen ist, die Aufladung der Batterie (5) der Vorrichtung durch die Quelle verhindert, wenn die Vorrichtung in einem inaktiven Zustand ist, und eine Ladeintensität mit einem geringen Pegel herbeiführt, wenn die Vorrichtung in einem aktiven Zustand ist.

7. Vorrichtung nach einem der Ansprüche 1 bis 6, wobei das Modul so konfiguriert ist, dass es,
- wenn die USB-Buchse an eine elektronische Vorrichtung angeschlossen ist, die dazu geeignet ist, Daten zu speichern und keine Energieversorgung hat, das fehlende Aufladen ihrer Batterie steuert.

8. Vorrichtung nach einem der Ansprüche 1 bis 7, wobei das Modul so konfiguriert ist, dass es jede Datenübertragung durch den USB-Stecker und die USB-Buchse im Falle einer Verbindung des USB-Steckers mit der USB-Buchse verhindert.

9. Vorrichtung nach einem der Ansprüche 1 bis 8, wobei der Kabelabschnitt (3) mit USB-Stecker (3a) und/oder der Kabelabschnitt (3) mit USB-Buchse (3b) ferner umfasst:
- einen zusätzlichen Steckverbinder (9) zum Datenaustausch, und/oder
- einen Speicherkartenleser (10).

10. Vorrichtung nach Anspruch 9, wobei der zusätzliche Steckverbinder (9) ein HDMI-Steckverbinder und/oder der Speicherkartenleser (10) ein SD-Kartenleser ist.

11. Vorrichtung nach einem der Ansprüche 1 bis 10, wobei die genannte Vorrichtung ausgewählt wird aus: einem USB-Schlüssel, einem Fotoapparat, einer Kamera, einem Rechner, einem Projektor oder einem Mobiltelefon.

## Claims

1. Device (1) including:
a cable portion (3) with a male USB connector (3a) connected to a module (2) being able to operate as a USB peripheral,
said device being **characterized in that** it also includes a cable portion with a female USB connector (3b) connected to the module, said module being able to also operate as a USB host, the male and female connectors being able to be connected with each other so that the cable portions form, together with the module, a loop, the module being configured for controlling data exchanges depending on the connection state of its male USB connector and of its female USB connector.

2. Device according to claim 1, comprising a battery (5), and wherein the module is configured for controlling the charging of its battery (5) depending on the connection state of its male USB connector and on its female USB connector.

3. Device (1) according to claim 2, wherein the module is configured for preventing the charging of the battery (5) when the connection state of the connectors corresponds to a connection between the male USB connector and the female USB connector.

4. Device (1) according to claim 2, wherein the module is configured for, when the male USB connector is connected to a source of energy, handling the intensity of the charging of its battery by the source of energy depending on the nature of the source.

5. Device (1) according to claim 4, wherein the module is configured for:
- when the male USB connector is connected to an energy charging adaptor recommended by the manufacturer, imposing a charging intensity at a low level if the device is in an active condition, or a high level charging intensity if the device is in an inactive condition.

6. Device (1) according to claim 5, wherein the module is configured for:
- when the male USB connector is connected to another charging adaptor or to other electronics, preventing the charging of the battery (5) of the device by the source if the device is in an inactive condition, and imposing a low level charging intensity if the device is in an active condition.

7. Device according to one of claims 1 to 6, wherein the module is configured for:
- when the female USB connector is connected to an electronic device able to store data and not comprising any power supply, handling the absence of charging of its battery.

8. Device according to one of claims 1 to 7, wherein the module is configured for preventing any data transfer through the male and female USB connectors in the case of connection of the male USB connector with the female USB connector.

9. Device according to one of claims 1 to 8, wherein the cable portion (3) with a male USB connector (3a), and/or the cable portion (3) with a female USB connector (3b) further comprise:
- an additional connector (9) for exchanging data, and/or
- a memory card reader (10).

10. Device according to claim 9, wherein the additional connector (9) is an HDMI connector and/or the memory card reader (10) is an SD card reader.

11. Device according to one of claims 1 to 10, said device being selected from among: a USB stick, a camera, a video camera, a computer, a projector or a mobile telephone.
